# EUROPÄISCHE PATENTANMELDUNG

(11) **EP 2 567 859 A1**
(43) Veröffentlichungstag der Anmeldung: **13.03.2013**
(21) Anmeldenummer: 11180200.5
(22) Anmeldetag: 06.09.2011
(51) Int. Cl.: B60L 15/20, H02K 7/12, H02K 16/02, H02P 5/747

(54) **Antrieb mit Motoren unterschiedlicher Momentenkennlinien**

(71) Anmelder: Siemens Aktiengesellschaft, 80333 München (DE)
(72) Erfinder: Bittner, Roland, 91522 Ansbach (DE); Hösle, Markus, 91058 Erlangen (DE)

(57) **Zusammenfassung**

Der Antrieb eines Fahrzeugs soll optimiert werden. Dazu wird ein Fahrzeug mit einem ersten Elektromotor (10), der eine erste Momentenkennlinie über der Drehzahl aufweist, zum Antrieb des Fahrzeugs und mit einem zweiten Elektromotor (11), der eine von der ersten verschiedene zweite Momentenkennlinie aufweist, ebenfalls zum Antrieb des Fahrzeugs vorgeschlagen. Je nach Situation kann dann der geeignetere Elektromotor zum Antrieb verwendet werden.

## Beschreibung

Die vorliegende Erfindung betrifft ein Fahrzeug mit einem Elektromotor, der eine Momentenkennlinie aufweist, zum Antrieb des Fahrzeugs. Darüber hinaus betrifft die vorliegende Erfindung ein Verfahren zum Betreiben eines Fahrzeugs mit einem derartigen Motor.

Elektrisch betriebene Fahrzeuge weisen meist einen Synchronmotor auf, der über einen Strom- bzw. Umrichter gespeist wird. Der Umrichter lässt sich mit einer entsprechenden Steuerung so takten, dass Motordrehzahlen von einem sehr kleinen Wert bis zu einer vorgebbaren Obergrenze, also in einem großen Drehzahlbereich, erreicht werden können. Zur Herstellung von Synchronmotoren sind allerdings in der Regel Permanentmagnete notwendig. Diese sind oft nur teuer zu erwerben. Daher besteht das Bedürfnis, sofern möglich, von Synchronmotoren abzukommen.

Eine kostengünstige Variante zu Synchronmotoren sind Asynchronmotoren. Für den Läufer sind keine Permanentmagnete notwendig, denn der Läufer eines Asynchronmotors lässt sich als Käfigläufer realisieren. Seine Herstellungskosten sind entsprechend günstiger.

Allerdings besitzt der Asynchronmotor eine Momentenkennlinie (Moment über der Drehzahl bzw. Winkelgeschwindigkeit), die, beginnend bei der Drehzahl 0, von einem Anfahrmoment bis zu einem maximalen Drehmoment, dem Kippmoment, ansteigt. Bei weiterer Erhöhung der Drehzahl fällt das Moment in der Regel steil ab. Durch den Frequenzumrichter kann das Kippmoment verändert werden. Die Synchronmaschine hingegen besitzt ein über den Umrichter einstellbares Drehmoment. Daher wird sie derzeit für Fahrzeugantriebe bevorzugt.

Die Aufgabe der vorliegenden Erfindung besteht darin, den elektrischen Antrieb eines Fahrzeugs kostengünstiger zu gestalten.

Erfindungsgemäß wird diese Aufgabe gelöst durch ein Fahrzeug mit einem ersten Elektromotor, der eine erste Momentenkennlinie über der Drehzahl aufweist, zum Antrieb des Fahrzeugs, und mit mindestens einem zweiten Elektromotor, der eine von der ersten verschiedene zweite Momentenkennlinie über der Drehzahl aufweist, ebenfalls zum Antrieb des Fahrzeugs.

In vorteilhafter Weise besitzt das Fahrzeug also neben dem ersten Elektromotor mit einer ersten Momentenkennlinie auch einen zweiten Elektromotor mit einer anderen zweiten Momentenkennlinie. Damit ist das Fahrzeug mit dem einen Elektromotor antreibbar und/oder mit dem anderen Elektromotor, je nachdem, welcher Antrieb für die momentane Situation günstiger ist.

Vorzugsweise handelt es sich bei dem ersten Elektromotor um einen Asynchronmotor und bei dem zweiten Elektromotor um einen Synchronmotor. Damit können für den Antrieb des Fahrzeugs die Vorteile des Asynchronmotors und die Vorteile des Synchronmotors genutzt werden. Wird der Synchronmotor dann beispielsweise nur für das Anfahren genutzt, so kann er entsprechend kleiner ausgelegt werden. Dies führt zu einer deutlichen Kostenreduktion gegenüber einen Synchronmotor, der auch bei Dauerlast betrieben wird.

Der erste Elektromotor und der zweite Elektromotor kann jeweils einem einzelnen Rad oder einer einzelnen Achse des Fahrzeugs zu dessen Antrieb zugeordnet sein. Damit kann beispielsweise ein Vierradantrieb dadurch realisiert werden, dass die beiden Achsen eines Kraftfahrzeugs jeweils von einem der Motoren angetrieben werden, oder dass entsprechend einem "echten" Vierradantrieb jedes einzelne Rad separat durch einen Elektromotor angetrieben wird.

Darüber hinaus kann das Fahrzeug eine Steuereinrichtung zum automatischen Detektieren eines fahrzeuginternen oder fahrzeugexternen Zustands und zum Ansteuern der Elektromotoren in Abhängigkeit von dem detektierten Zustand aufweisen. Derartige fahrzeuginterne Zustände sind beispielsweise die gemessene Geschwindigkeit, die Motordrehzahl, die Zuladung, die Präsenz eines Anhängers und dergleichen. Fahrzeugexterne Zustände sind beispielsweise die Steigung, die Temperatur und dergleichen. Je nach detektiertem Zustand liegt eine spezifische Situation vor. Ändert sich die Situation, so kann beispielsweise der eine Elektromotor abgeschaltet und der andere Elektromotor eingeschaltet werden. Es kann dann aber auch ein gleitendes Umschalten zwischen den Elektromotoren stattfinden.

Darüber hinaus kann ein Rotor des ersten Elektromotors und ein Rotor des zweiten Elektromotors auf einer gemeinsamen Welle befestigt sein. Dies hat den Vorteil, dass die anzutreibende Welle direkt von dem einen Elektromotor und von dem anderen Elektromotor angetrieben werden kann.

Insbesondere können die beiden Elektromotoren einen gemeinsamen Stator besitzen, und die Welle mit den Rotoren kann in dem Stator axial verschiebbar sein. Dies hat den Vorteil, dass ein einzelner Stator für beide Elektromotoren genutzt werden kann, was hinsichtlich einer Gewichtseinsparung bei dem Fahrzeug Vorzüge bringt.

Zudem kann das Fahrzeug eine Kupplung aufweisen, mit der die beiden Elektromotoren mechanisch trennbar und verbindbar sind. Damit können die Elektromotoren je nach Bedarfsfall mechanisch gekoppelt oder einzeln betrieben werden.

Die obige Aufgabe wird auch gelöst durch ein Verfahren zum Betreiben eines oben beschriebenen Fahrzeugs durch automatisches Detektieren einer ersten Situation, Antreiben des Fahrzeugs in der ersten Situation mit dem ersten Elektromotor, automatisches Detektieren einer von der ersten verschiedenen zweiten Situation und Antreiben des Fahrzeugs in der zweiten Situation mit dem zweiten Elektromotor.

In vorteilhafter Weise wird dabei das Fahrzeug situationsabhängig gesteuert. In einer ersten Situation ist es beispielsweise wünschenswert, den einen Elektromotor mit der einen Momentenkennlinie zu nutzen, während es in einer anderen Situation günstig ist, den anderen Elektromotor mit der anderen Momentenkennlinie zu nutzen. Durch das automatische Detektieren der jeweiligen Situation kann dann für den Betrieb der jeweils optimale Antrieb vorgesehen werden.

Die erste Situation und die zweite Situation kann einen fahrzeugexternen oder einen fahrzeuginternen Zustand betreffen. Derartige Zustandsinformationen liegen in einem Fahrzeug in der Regel ohnehin vor, sodass sie auch für die Ansteuerung der Elektromotoren genutzt werden können.

Die vorliegende Erfindung wird nun anhand der beigefügten Zeichnungen näher erläutert, in denen zeigen:
- FIG 1: einen elektrischen Antrieb mit zwei Rotoren und einem Stator; und
- FIG 2: ein Fahrzeug mit jeweils einem Antriebsmotor pro Rad.

Die nachfolgend näher geschilderten Ausführungsbeispiele stellen bevorzugte Ausführungsformen der vorliegenden Erfindung dar.

Der allgemeine Gedanke der vorliegenden Erfindung besteht darin, dass ein Fahrzeug mehrere Motoren mit unterschiedlichen Momentenkennlinien aufweist. Die folgenden Ausführungsbeispiele sind darauf beschränkt, dass ein Fahrzeug, insbesondere ein Straßenfahrzeug (z.B. Personenkraftwagen oder Lastkraftwagen), mindestens einen Asynchronmotor und mindestens einen Synchronmotor aufweist. Der Asynchronmotor und der Synchronmotor in einem Fahrzeug sind also nachfolgend stellvertretend für zwei Motoren mit unterschiedlichen Momentenkennlinien genannt.

Ein Asynchronmotor besitzt, wie eingangs erwähnt, eine Momentenkennlinie über der Drehzahl mit einem Kippmoment, das ein maximales Drehmoment bei einer bestimmten Drehzahl darstellt. Synchronmotoren hingegen besitzen idealisiert eine Drehmomentkennlinie, die eine vertikale Linie über der festgelegten Synchrondrehzahl darstellt. In der Praxis erfolgt der Anlauf beispielsweise wie der eines normalen Kurzschlussläufermotors über die Käfigwicklung. In der Nähe der Synchrondrehzahl fällt der Läufer bei einem Intrittfallmoment in Tritt (er synchronisiert) und kann danach bis zu einem Außertrittfallmoment bei synchroner Drehzahl belastet werden.

Die Anforderungen an ein zur Verfügung stehendes Antriebsmoment sind bei Fahrzeugen sehr unterschiedlich. Beispielsweise wird beim Anfahren am Berg oder beim Anfahren über einen Bordstein ein hohes Drehmoment bei niedriger Drehzahl benötigt. Bei hohen Drehzahlen hingegen spielt die Effizienz des Antriebs eine besondere Rolle. Natürlich sind auch die Anschaffungskosten der verschiedenen Antriebe von Bedeutung. Um die Vorzüge beider Motoren (Asynchronmotor und Synchronmotor) nutzen zu können, sind sie beide zum Antrieb in ein beispielhaftes Fahrzeug eingebaut. Je nach Einsatzbereich kann einer der Motoren für höhere Leistungen und der andere Motor für geringere Leistungen ausgelegt sein. So ist es z.B. von Vorteil, wenn das Fahrzeug einen kostengünstigeren großen Asynchronmotor für höhere Leistungen und einen kleineren, teureren Synchronmotor für niedrige Leistungen in speziellen Situationen besitzt.

Eine übergeordnete Steuereinrichtung steuert bzw. regelt die beiden Motoren in ihrem Einsatz. Dazu wird von der Steuereinrichtung bzw. einer daran angeschlossenen Sensorik eine aktuelle Situation ermittelt, und in Abhängigkeit davon wird der Asynchronmotor und/oder der Synchronmotor aktiviert. Gegebenenfalls werden also auch beide Motoren aktiviert. Ändert sich die Situation, so wird dies von der Sensorik bzw. der Steuereinrichtung erfasst, und die beiden Motoren werden anders angesteuert. Unter Umständen wird ein kontinuierlicher Übergang jedes der Motoren von der einen Situation zu der anderen Situation erreicht. Die Motoren werden dabei also nicht nur an- und abgeschaltet, sondern ihre Leistung wird kontinuierlich oder schrittweise herunter- bzw. heraufgeregelt.

In einem konkreten Beispiel besitzt ein Fahrzeug eben den Asynchronmotor und den Synchronmotor. Die Steuereinrichtung steuert die beiden Motoren so, dass bei einer Dauerlast der Asynchronmotor betrieben wird. Dabei versteht man unter einer Dauerlast beispielsweise den Betrieb des Fahrzeugs mit einer Geschwindigkeit über 5 km/h. Dieser untere Dauerlastgrenzwert kann aber auch einen anderen Wert, z.B. 1 km/h, 2 km/h etc., betragen. Damit findet der günstigere Asynchronmotor für den allgemeinen Dauerbetrieb Einsatz.

Darüber hinaus kann das Fahrzeug von der Steuereinrichtung so angesteuert werden, dass beim Anfahren des Fahrzeugs der Synchronmotor zum Einsatz kommt. Bei geeigneter Taktung des Umrichters des Synchronmotors kann somit ein höheres Drehmoment bei kleinen Drehzahlen erreicht werden als bei einem Asynchronmotor, insbesondere bei einem Asynchronmotor, dessen Kippmoment in einem höheren Drehzahlbereich liegt.

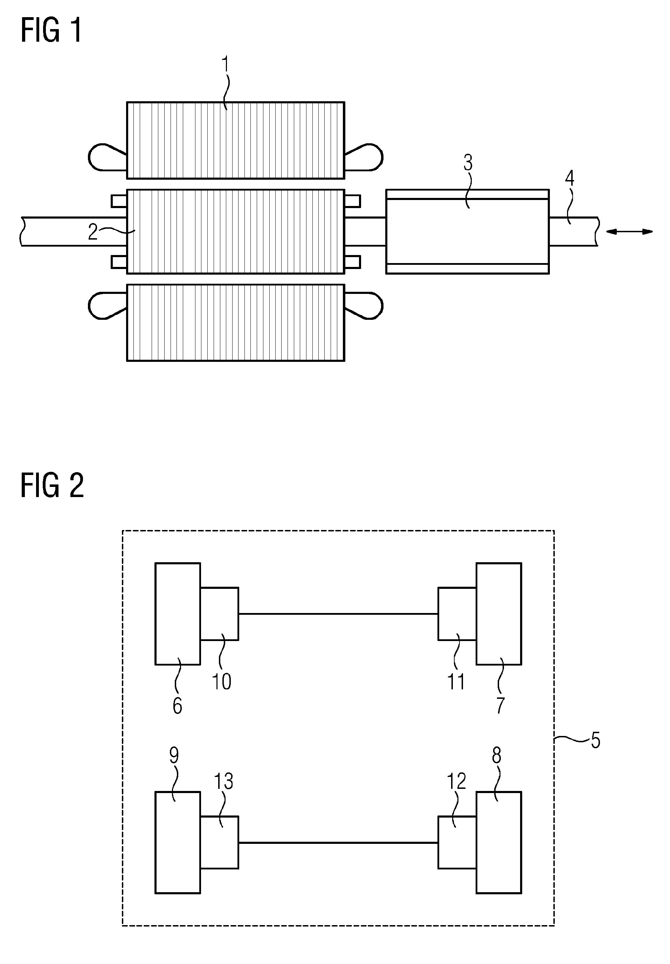

In FIG 1 ist ein spezielles Beispiel eines Antriebs mit einem Asynchronmotor und einem Synchronmotor dargestellt. Die beiden Motoren besitzen einen gemeinsamen Stator 1. Jeder Motor besitzt jedoch einen eigenen Rotor: den Rotor 2 für die Asynchronmaschine und den Rotor 3 für die Synchronmaschine. Der Rotor 2 der Asynchronmaschine ist beispielsweise mit einem Kurzschlusskäfig ausgestattet, während der Rotor 3 des Synchronmotors mit Permanentmagneten versehen ist. Die beiden Rotoren 2 und 3 sind drehfest auf einer gemeinsamen Welle 4 angeordnet. Im vorliegenden Fall sind sie auch axial fest auf der Welle 4 angeordnet. Die Welle 4 ist axial verschiebbar. Damit kann in einem Betriebszustand der Rotor 2 in den Stator 1 bewegt werden, sodass die elektrische Maschine als Asynchronmaschine betrieben werden kann. Im anderen Fall kann der Rotor 3 der Synchronmaschine in den Stator 1 bewegt werden, womit sich die Maschine als Synchronmaschine betreiben lässt.

Bei diesem Beispiel wird also auf einen zweiten Stator verzichtet, was eine deutliche Gewichtseinsparung bedeutet.

Während des Betriebs wird beispielsweise der Rotor 3 des Synchronmotors nach dem Anfahren des Fahrzeugs aus dem Stator 1 bewegt. Gleichzeitig wird der Rotor 2 des Asynchronmotors in den Stator 1 gefahren. Das Fahrzeug wird somit nach dem Anfahren mit dem Asynchronmotor weiter betrieben.

Zum Betrieb der Motoren sind diese in geeigneter Weise anzusteuern. Gemäß einer ersten Ausführungsform wird der Stator 1 von einem einzigen Umrichter angesteuert sowohl für den Fall, dass der Motor als Asynchronmotor als auch für den Fall, dass der Motor als Synchronmotor betrieben wird. Alternativ sind zwei Umrichter vorgesehen, und es sind die beiden Umrichter parallel an den Stator 1 geschaltet und es wird nur jeweils der passende Umrichter betrieben.

Diese Ansteuerung mit einem oder zwei Umrichtern ist auch für den Fall möglich, dass jeder der beiden Motoren einen separaten Stator besitzt. Auch kann ein Umrichter für mehrere Motoren des gleichen Motortyps verwendet werden.

In FIG 2 ist ein Fahrzeug 5 dargestellt, das die vier Räder 6, 7, 8 und 9 aufweist. Jedem Rad 6 bis 9 ist hier ein separater Motor zugeordnet. Es liegt also ein echter Vierradantrieb vor, bei dem jedes Rad einzeln angetrieben wird. Beispielhaft ist den Rädern 6 und 8 je ein Asynchronmotor 10, 12 und den Rädern 7 und 9 je ein Synchronmotor 11, 13 zugeordnet. Demnach werden sowohl die Vorderräder als auch die Hinterräder jeweils von einem Asynchronmotor und einem Synchronmotor angetrieben. Beispielsweise können aber auch die Vorderräder 6, 7 nur durch Asynchronmotoren und die Hinterräder 8, 9 nur durch Synchronmotoren oder umgekehrt angetrieben werden.

Darüber hinaus kann auch vorgesehen sein, dass ein Motor, beispielsweise ein Asynchronmotor, zum Antrieb der Vorderachse und ein anderer Motor, z.B. ein Synchronmotor, zum Antrieb der Hinterachse verwendet wird. In diesem Fall treibt ein Motor die beiden Räder 6, 7 auf der Vorderachse und der andere Motor die beiden Räder 8, 9 auf der Hinterachse an. Bei einem mehrachsigen Lastkraftwagen kann jeder Achse ein separater Motor zugeordnet werden. Auch hier kann jeweils der Einsatz eines Asynchronmotors oder eines Synchronmotors je nach Einsatzzweck gewählt werden.

Gemäß einem weiteren Ausführungsbeispiel sind der Synchronmotor und der Asynchronmotor mit einer Kupplung mechanisch gekoppelt. In diesem Fall lassen sie sich über die Kupplung trennen und verbinden. Sind die beiden Motoren getrennt, so reduziert dies die Trägheit des Antriebs. Außerdem werden Wirbelströme vermieden, die die Permanentmagnete des Synchronmotors erzeugen, falls der Rotor des Synchronmotors durch den Rotor des Asynchronmotors mit bewegt wird.

Stehen verschiedene Elektromotoren zur Verfügung, könnten bei bestimmten Ausfallszenarien von Leistungshalbleitern Notlaufeigenschaften erreicht werden, indem ein nicht betriebener Motor als Induktivität genutzt wird. Eine derartige Induktivität kann beispielsweise zum Glätten von Ansteuersignalen eines getakteten Stromrichters dienen. Der Umrichter ist dann entsprechend mit dem nicht betriebenen Motor zu verschalten.

Darüber hinaus kann bei der Regelung eines Umrichters auch eine so genannte "Vorsteuerung" vorgesehen sein. Diese Vorsteuerung hat den Zweck, dass der Umrichter mit Informationen gefüttert wird, die die unmittelbare Gegenwart oder die Zukunft betreffen. So ist es beispielsweise günstig, wenn der Umrichter eine Information darüber erhält, dass in Zukunft ein höheres Moment benötigt wird. Wird diese Information durch entsprechende Vorsteuerung berücksichtigt, so kommt es nicht zu einem starken Einbruch der Drehzahl, wenn das erhöhte Drehmoment angefordert wird.

Welcher der Motoren des Fahrzeugs zu welchem Zeitpunkt in Betrieb genommen wird, hängt von der jeweiligen Situation ab. Eine Situation wird beispielsweise durch fahrzeuginterne Zustände charakterisiert. Entsprechende interne Zustände beziehen sich beispielsweise auf die Drehzahl bzw. Geschwindigkeit eines Motors, auf die Zuladung des Fahrzeugs, auf den Energieinhalt der Batterie und dergleichen. Darüber hinaus kann durch einen Sensor auch festgestellt werden, ob das Fahrzeug einen Anhänger besitzt, sodass in Abhängigkeit davon der geeignete Motortyp gewählt wird bzw. ein zusätzlicher Motor zugeschaltet wird. Eine spezielle Situation stellt der Ausfall eines Motors dar. In dieser Situation wird dann der jeweils andere Motor zum Antrieb eingesetzt.

Eine Situation, in der das Fahrzeug betrieben wird, kann aber auch durch externe Zustände charakterisiert sein. Beispielsweise steht das Fahrzeug an einem Hang, und ein geeigneter Sensor des Fahrzeugs stellt die entsprechende Steigung fest. In Abhängigkeit von der Steigung wählt die übergeordnete Steuereinrichtung dann den geeigneten Motor zum Fahren bzw. Anfahren aus.

## Patentansprüche

1. Fahrzeug (5) mit
- einem ersten Elektromotor (10), der eine erste Momentenkennlinie über der Drehzahl aufweist, zum Antrieb des Fahrzeugs (5),
**gekennzeichnet durch**
- mindestens einen zweiten Elektromotor (11), der eine von der ersten verschiedene zweite Momentenkennlinie über der Drehzahl aufweist, ebenfalls zum Antrieb des Fahrzeugs (5).

2. Fahrzeug (5) nach Anspruch 1, wobei der erste Elektromotor (10) ein Asynchronmotor und der zweite Elektromotor (11) ein Synchronmotor ist.

3. Fahrzeug (5) nach Anspruch 1 oder 2, wobei der erste Elektromotor (10) und der zweite Elektromotor (11) jeweils einem einzelnen Rad (6 bis 9) oder einer einzelnen Achse des Fahrzeugs (5) zu dessen Antrieb zugeordnet ist.

4. Fahrzeug (5) nach einem der vorhergehenden Ansprüche, das eine Steuereinrichtung zum automatischen Detektieren eines fahrzeuginternen oder fahrzeugexternen Zustands und zum Ansteuern der Elektromotoren (10, 11) in Abhängigkeit von dem detektierten Zustand aufweist.

5. Fahrzeug (5) nach einem der vorhergehenden Ansprüche, wobei ein Rotor (2) des ersten Elektromotors (10) und ein Rotor (3) des zweiten Elektromotors (11) auf einer gemeinsamen Welle (4) befestigt sind.

6. Fahrzeug (5) nach Anspruch 5, wobei die beiden Elektromotoren (10,11) einen gemeinsamen Stator (1) besitzen, und die Welle (4) mit den Rotoren (2,3) in dem Stator (1) axial verschiebbar ist.

7. Fahrzeug (5) nach einem der vorhergehenden Ansprüche, das eine Kupplung aufweist, mit der die beiden Elektromotoren (10,11) mechanisch trennbar und verbindbar sind.

8. Fahrzeug (5) nach einem der vorhergehenden Ansprüche, wobei die beiden Elektromotoren (10,11) zur Speisung einen gemeinsamen Stromrichter aufweisen.

9. Verfahren zum Betreiben eines Fahrzeugs (5) gemäß einem der vorhergehenden Ansprüche durch
- automatisches Detektieren einer ersten Situation,
- Antreiben des Fahrzeugs (5) in der ersten Situation mit dem ersten Elektromotor (10),
- automatisches Detektieren einer von der ersten verschiedenen zweiten Situation,
- Antreiben des Fahrzeugs (5) in der zweiten Situation mit dem zweiten Elektromotor (11).

10. Verfahren nach Anspruch 9, wobei die erste Situation und die zweite Situation einen fahrzeugexternen oder einen fahrzeuginternen Zustand betreffen.

## Geänderte Patentansprüche

### Geänderte Patentansprüche gemäss Regel 137(2) EPÜ.

**1.** Fahrzeug (5) mit
- einem ersten Elektromotor (10), der eine erste Momentenkennlinie über der Drehzahl aufweist, zum Antrieb des Fahrzeugs (5), und
- mindestens einen zweiten Elektromotor (11), der eine von der ersten verschiedene zweite Momentenkennlinie über der Drehzahl aufweist, ebenfalls zum Antrieb des Fahrzeugs (5), wobei
- ein Rotor (2) des ersten Elektromotors (10) und ein Rotor (3) des zweiten Elektromotors (11) auf einer gemeinsamen Welle (4) befestigt sind,
**dadurch gekennzeichnet, dass**
- die beiden Elektromotoren (10,11) einen gemeinsamen Stator (1) besitzen, und die Welle (4) mit den Rotoren (2,3) in dem Stator (1) axial verschiebbar ist, und
- das Fahrzeug (5) eine Steuereinrichtung aufweist, die das Fahrzeug (5) so ansteuert, dass zum Anfahren des Fahrzeugs (5) der Rotor (3) des zweiten Elektromotors (11) in den Stator (1) bewegt wird und nach dem Anfahren des Fahrzeugs (5) der Rotor (2) des ersten Elektromotors (10) in den Stator (1) bewegt wird.

**2.** Fahrzeug (5) nach Anspruch 1, wobei der erste Elektromotor (10) ein Asynchronmotor und der zweite Elektromotor (11) ein Synchronmotor ist.

**3.** Fahrzeug (5) nach Anspruch 1 oder 2, wobei der erste Elektromotor (10) und der zweite Elektromotor (11) jeweils einem einzelnen Rad (6 bis 9) oder einer einzelnen Achse des Fahrzeugs (5) zu dessen Antrieb zugeordnet ist.

**4.** Fahrzeug (5) nach einem der vorhergehenden Ansprüche, das die Steuereinrichtung zum automatischen Detektieren eines fahrzeuginternen oder fahrzeugexternen Zustands und zum Ansteuern der Elektromotoren (10, 11) in Abhängigkeit von dem detektierten Zustand ausgebildet ist.

**5.** Fahrzeug (5) nach einem der vorhergehenden Ansprüche, dass eine Kupplung aufweist, mit der die beiden Elektromotoren (10,11) mechanisch trennbar und verbindbar sind.

**6.** Fahrzeug (5) nach einem der vorhergehenden Ansprüche, wobei die beiden Elektromotoren (10,11) zur Speisung einen gemeinsamen Stromrichter aufweisen.

**7.** Verfahren zum Betreiben eines Fahrzeugs (5) durch
- Antreiben des Fahrzeugs (5) mit einem ersten Elektromotor (10), der eine erste Momentenkennlinie über der Drehzahl aufweist, und
- Antreiben des Fahrzeugs (5) mit mindestens einem zweiten Elektromotor (11), der eine von der ersten verschiedene zweite Momentenkennlinie über der Drehzahl aufweist, wobei
- ein Rotor (2) des ersten Elektromotors (10) und ein Rotor (3) des zweiten Elektromotors (11) auf einer gemeinsamen Welle (4) befestigt sind,
**gekennzeichnet durch**
- axiales Verschieben der Welle (4) mit den Rotoren (2,3) in dem Stator (1), wobei die beiden Elektromotoren (10,11) einen gemeinsamen Stator (1) besitzen,
- Bewegen des Rotor (3) des zweiten Elektromotors (11) in den Stator (1) dass zum Anfahren des Fahrzeugs (5) und
- Bewegen des Rotors (2) des ersten Elektromotors (10) in den Stator (1) nach dem Anfahren des Fahrzeugs (5).

**8.** Verfahren nach Anspruch 7, wobei ein fahrzeugexterner oder ein fahrzeuginterner Zustand automatisch detektiert und die Elektromotoren (10, 11) in Abhängigkeit von dem detektierten Zustand angesteuert werden.
